(19) Europäisches Patentamt
European Patent Office
Office européen des brevets

(11) **EP 3 363 145 B1**

(12) **EUROPÄISCHE PATENTSCHRIFT**

(45) Veröffentlichungstag und Bekanntmachung des Hinweises auf die Patenterteilung:
**04.09.2019 Patentblatt 2019/36**

(21) Anmeldenummer: **16779091.4**

(22) Anmeldetag: **10.10.2016**

(51) Int Cl.:
*H04L 9/08* (2006.01)      *H04L 9/12* (2006.01)
*H04L 29/06* (2006.01)

(86) Internationale Anmeldenummer:
**PCT/EP2016/074213**

(87) Internationale Veröffentlichungsnummer:
**WO 2017/064000 (20.04.2017 Gazette 2017/16)**

(54) **VERFAHREN UND VORRICHTUNG ZUR ERZEUGUNG EINES GEMEINSAMEN GEHEIMNISSES**

METHOD AND DEVICE FOR PRODUCING A COMMON SECRET

PROCÉDÉ ET DISPOSITIF PERMETTANT DE GÉNÉRER UN SECRET PARTAGÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.10.2015 DE 102015219994**

(43) Veröffentlichungstag der Anmeldung:
**22.08.2018 Patentblatt 2018/34**

(73) Patentinhaber: **Robert Bosch GmbH**
**70442 Stuttgart (DE)**

(72) Erfinder:
• **HARTWICH, Florian**
**72762 Reutlingen (DE)**
• **LOTHSPEICH, Timo**
**71287 Weissach (DE)**
• **BAILER, Franz**
**72116 Moessingen (DE)**
• **HORST, Christian**
**72144 Dusslingen (DE)**
• **MUTTER, Arthur**
**73765 Neuhausen (DE)**
• **MUELLER, Andreas**
**71336 Waiblingen (DE)**
• **SCHWEPP, Thorsten**
**71404 Korb (DE)**

(56) Entgegenhaltungen:
**DE-A1-102012 215 326**

• **"Road vehicles ? Controller area network (CAN) ? Part 1: Data link layer and physical signalling ; ISO+11898-1-2003", IEEE DRAFT; ISO+11898-1-2003, IEEE-SA, PISCATAWAY, NJ USA, Bd. msc.upamd, 18. November 2010 (2010-11-18), Seiten 1-52, XP017637056, [gefunden am 2010-11-18]**
• **"BOSCH CAN SPECIFICATION VERSION 2.0", BOSCH CAN SPECIFICATION VERSION 2.0, XX, XX, 1. September 1991 (1991-09-01), Seiten 1-69, XP002291910,**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft ein Verfahren zur Erzeugung eines gemeinsamen Geheimnisses in einem Netzwerk, insbesondere zur Erzeugung eines gemeinsamen Geheimnisses in zwei Teilnehmern des Netzwerkes, das beispielsweise zur Ableitung eines gemeinsamen, geheimen kryptographischen Schlüssels verwendet werden kann. Die vorliegende Erfindung betrifft darüber hinaus eine entsprechende Vorrichtung, ein entsprechendes Computerprogramm sowie ein entsprechendes Speichermedium. Dabei kommunizieren die beteiligten Knoten oder Teilnehmer über ein gemeinsam genutztes Übertragungsmedium. Hierbei werden logische Bitfolgen - bzw. allgemeiner: Wertfolgen - durch entsprechende Übertragungsverfahren als Signale bzw. Signalfolgen physikalisch übertragen.

Das zugrundeliegende Kommunikationssystem kann z. B. ein CAN-Bus sein. Dieser sieht eine Übertragung dominanter und rezessiver Bits bzw. entsprechend dominanter und rezessiver Signale vor, wobei sich ein dominantes Signal bzw. Bit eines Teilnehmers des Netzwerks gegen rezessive Signale bzw. Bits anderer Teilnehmer durchsetzt. Ein Zustand entsprechend dem rezessiven Signal stellt sich auf dem Übertragungsmedium nur dann ein, wenn alle aktiv beteiligten Teilnehmer ein rezessives Signal zur Übertragung vorsehen bzw. wenn alle gleichzeitig sendenden Teilnehmer einen rezessiven Signalpegel übertragen.

Stand der Technik

Eine sichere Kommunikation zwischen verschiedenen Geräten wird in einer zunehmend vernetzten Welt immer wichtiger und stellt in vielen Anwendungsbereichen eine wesentliche Voraussetzung für die Akzeptanz und somit auch den wirtschaftlichen Erfolg der entsprechenden Anwendungen dar. Dies umfasst - je nach Anwendung - verschiedene Schutzziele, wie beispielsweise die Wahrung der Vertraulichkeit der zu übertragenden Daten, die gegenseitige Authentifizierung der beteiligten Knoten oder die Sicherstellung der Datenintegrität.

Zur Erreichung dieser Schutzziele kommen üblicherweise geeignete kryptographische Verfahren zum Einsatz, die man generell in zwei verschiedene Kategorien unterteilen kann: zum einen symmetrische Verfahren, bei denen Sender und Empfänger über denselben kryptographischen Schlüssel verfügen, zum anderen asymmetrische Verfahren, bei denen der Sender die zu übertragenden Daten mit dem öffentlichen - d. h. auch einem potenziellen Angreifer möglicherweise bekannten - Schlüssel des Empfängers verschlüsselt, die Entschlüsselung aber nur mit dem zugehörigen privaten Schlüssel erfolgen kann, der idealerweise nur dem Empfänger bekannt ist.

Asymmetrische Verfahren haben unter anderem den Nachteil, dass sie in der Regel eine sehr hohe Rechenkomplexität aufweisen. Damit sind sie nur bedingt für ressourcenbeschränkte Knoten wie z. B. Sensoren, Aktuatoren o. ä. geeignet, die üblicherweise nur über eine relativ geringe Rechenleistung sowie geringen Speicher verfügen und energieeffizient arbeiten sollen, beispielsweise aufgrund von Batteriebetrieb oder dem Einsatz des sogenannten "Energy Harvesting". Darüber hinaus steht oftmals nur eine begrenzte Bandbreite zur Datenübertragung zur Verfügung, was den Austausch von asymmetrischen Schlüsseln mit Längen von 2048 Bit oder noch mehr unattraktiv macht.

Bei symmetrischen Verfahren hingegen muss gewährleistet sein, dass sowohl Empfänger als auch Sender über den gleichen kryptographischen Schlüssel verfügen. Das zugehörige Schlüsselmanagement stellt dabei generell eine sehr anspruchsvolle Aufgabe dar. Im Bereich des Mobilfunks werden Schlüssel beispielsweise mit Hilfe von SIM-Karten in ein Mobiltelefon eingebracht und das zugehörige Netz kann dann der eindeutigen Kennung einer SIM-Karte den entsprechenden Schlüssel zuordnen. Im Fall eines drahtlosen lokalen Netzwerks (*wireless local area network,* WLAN) hingegen erfolgt oftmals eine manuelle Eingabe der zu verwendenden Schlüssel - in der Regel durch die Eingabe eines Passwortes - bei der Einrichtung des Netzwerkes. Ein solches Schlüsselmanagement wird allerdings schnell sehr aufwändig und impraktikabel, wenn man eine sehr große Anzahl von Knoten hat, beispielsweise in einem Sensornetzwerk oder anderen Maschine-zu-Maschine-Kommunikationssystemen, z. B. CAN-basierten Fahrzeugnetzwerken. Darüber hinaus ist eine Änderung der zu verwendenden Schlüssel - etwa im Rahmen einer regelmäßigen Neuberechnung oder "Auffrischung" (*re-keying*) - oftmals überhaupt nicht bzw. nur mit sehr großem Aufwand möglich.

DE 10 2012 215326 A1 beschreibt ein Verfahren zur Erzeugung eines kryptografischen Schlüssels in einem Netzwerk mit einem ersten Netzwerkelement, einem zweiten Netzwerkelement und einem Netzwerkknoten, wobei das erste Netzwerkelement über einen ersten Übertragungskanal und das zweite Netzwerkelement über einen zweiten Übertragungskanal mit dem Netzwerkknoten kommunizieren kann. Das Verfahren umfasst aufseiten des ersten Netzwerkelements einen Schritt des Bestimmens einer ersten Kanalinformation bezüglich des ersten Übertragungskanals basierend auf einem von dem Netzwerkknoten ausgesendeten ersten Pilotsignal und einen Schritt des Ermittelns des symmetrischen kryptografischen Schlüssels unter Verwendung der ersten Kanalinformation und einer Information über eine kombinierte Kanalinformation, wobei die kombinierte Kanalinformation eine seitens des Netzwerkknotens basierend auf einem von dem ersten Netzwerkelement zu dem Netzwerknoten übertragenen zweiten Pilotsignal und einem von dem zweiten Netzwerkelement zu dem Netzwerknoten übertragenen dritten Pilotsignal bestimmte Kombination von Übertragungscharakteristiken des ersten und des zweiten Übertragungskanals repräsentiert.

Offenbarung der Erfindung

Die Erfindung stellt ein Verfahren zur Erzeugung eines gemeinsamen Geheimnisses in einem Netzwerk, insbesondere zur Erzeugung eines gemeinsamen Geheimnisses in zwei Teilnehmern des Netzwerkes, das beispielsweise zur Ableitung eines gemeinsamen, geheimen kryptographischen Schlüssels verwendet werden kann, eine entsprechende Vorrichtung, ein entsprechendes Computerprogramm sowie ein entsprechendes Speichermedium gemäß den unabhängigen Ansprüchen bereit.

Ein Vorzug dieser Lösung liegt in seiner Berücksichtigung von Mechanismen, um die zur Schlüsselerzeugung benötigten Überlagerungsphasen einzuleiten und die dabei zu beteiligenden Knoten (eindeutig) zu identifizieren bzw. zu adressieren. Sie schafft somit eine wichtige Voraussetzung für den Einsatz des Verfahrens in praktischen Systemen.

Die Erfindung eignet sich für zahlreiche drahtgebundene Kommunikationssysteme, speziell in Fahrzeug- und Automatisierungsnetzwerken - z. B. CAN, TTCAN, CAN FD und LIN - aber auch für andere Bussysteme wie z.B. I$^2$C oder auch bestimmte drahtlose Kommunikationssysteme. Dementsprechend ergeben sich hierfür zahlreiche potenzielle Anwendungsmöglichkeiten in der Praxis.

Betrachtet werden dabei unter anderem die Art und Weise, wie die beteiligten Knoten wissen, dass gerade sie ein gemeinsames Geheimnis etablieren sollen sowie die Art und Weise, wie die nachfolgend beschriebene Prozedur angestoßen werden soll. Die erfindungsgemäßen Verfahren stellen somit die Einsetzbarkeit in praktischen Systemen sicher. Primär wird dabei der mögliche Einsatz in CAN-basierten Netzwerken betrachtet - inkl. CAN FD etc. -, wobei die meisten Ideen aber auch in anderen Kommunikationssystemen sinnvoll zur Anwendung kommen können sollten

Durch die in den abhängigen Ansprüchen aufgeführten Maßnahmen sind vorteilhafte Weiterbildungen und Verbesserungen des im unabhängigen Anspruch angegebenen Grundgedankens möglich.

Kurze Beschreibung der Zeichnungen

Ausführungsbeispiele der Erfindung sind in den Zeichnungen dargestellt und in der nachfolgenden Beschreibung näher erläutert. Es zeigt:

Figur 1 die betrachtete Anordnung mit einem ersten Knoten A, einem zweiten Knoten B und einem optionalen logischen Masterknoten C, die über ein gemeinsam genutztes Übertragungsmedium 10 (*shared medium*) miteinander kommunizieren können. Weitere Knoten, die ggf. ebenfalls über das Medium mit kommunizieren können, sowie potenzielle Angreifer wurden dabei der Übersichtlichkeit halber nicht zeichnerisch berücksichtigt.

Figur 2 die betrachtete Anordnung für den Fall, dass das gemeinsam genutzte Übertragungsmedium 10 ein linearer Bus 20 ist. Die Reihenfolge der Anordnung der verschiedenen Knoten auf dem Bus ist dabei willkürlich gewählt.

Figur 3 das Aktivitätsdiagramm eines Verfahrens gemäß einer Ausführungsform der Erfindung.

Ausführungsformen der Erfindung

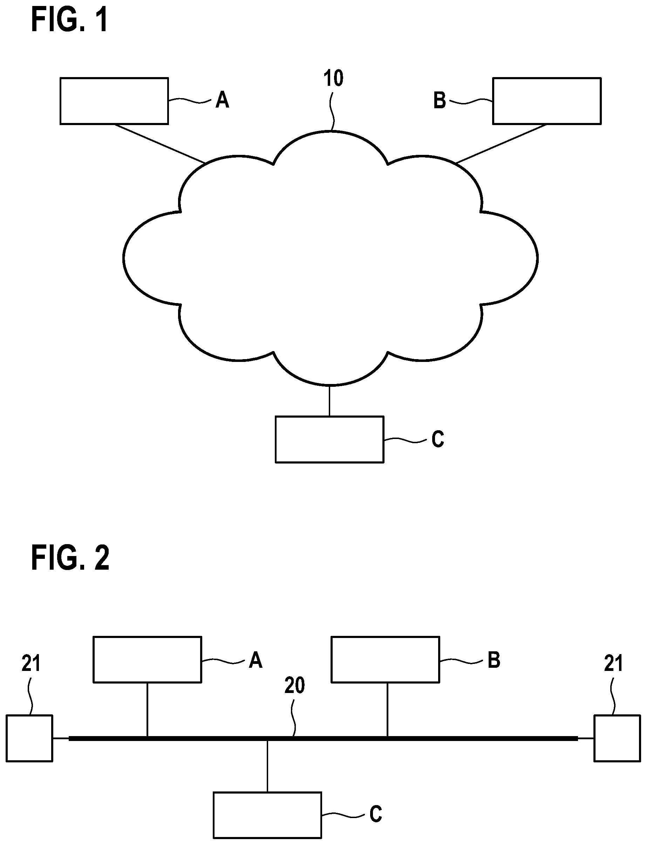

Im Weiteren wird eine Anordnung gemäß Figur 1 betrachtet. Dabei können verschiedene Knoten A, B, C - einschließlich des ersten Knotens A, des zweiten Knotens B und des dritten Knotens C - über ein gemeinsam genutztes Medium 10 miteinander kommunizieren. In einer vorteilhaften Ausprägung der Erfindung entspricht dieses Medium 10 einem - drahtgebundenen oder optischen - linearen Bus 20 mit beidseitigem Netzabschluss (*termination*) 21, was beispielhaft in Figur 2 dargestellt ist. Bei den Knoten A, B, C könnte es sich bspw. um Steuergeräte in einem Fahrzeug handeln, die über einen CAN-, TTCAN-, CAN FD- oder LIN-Bus miteinander kommunizieren. Der Masterknoten C ist optional in dem Sinne, dass er nicht für alle erfindungsgemäßen Verfahren benötigt wird. Zudem handelt es sich dabei im Allgemeinen lediglich um eine logische Rolle, so dass die Masterfunktionalität auch in einen anderen Knoten (inkl. dem zweiten Knoten B) integriert sein kann.

In Fahrzeugnetzwerken könnte die Rolle des Masterknotens C in einem bestimmten Netzwerksegment vorzugsweise beispielsweise von einem Gateway-Knoten mit übernommen werden.

Mit Hilfe des im Folgenden beschriebenen Verfahrens ist es dem ersten Knoten A und dem zweiten Knoten B möglich, mittels einer öffentlichen Diskussion über das gemeinsam genutzte Übertragungsmedium 10, 20 ein gemeinsames Geheimnis zu etablieren, das beispielsweise als Grundlage für die Generierung eines symmetrischen kryptographischen Schlüssels oder eines Einmalschlüssels (*one-time pad*) verwendet werden kann:

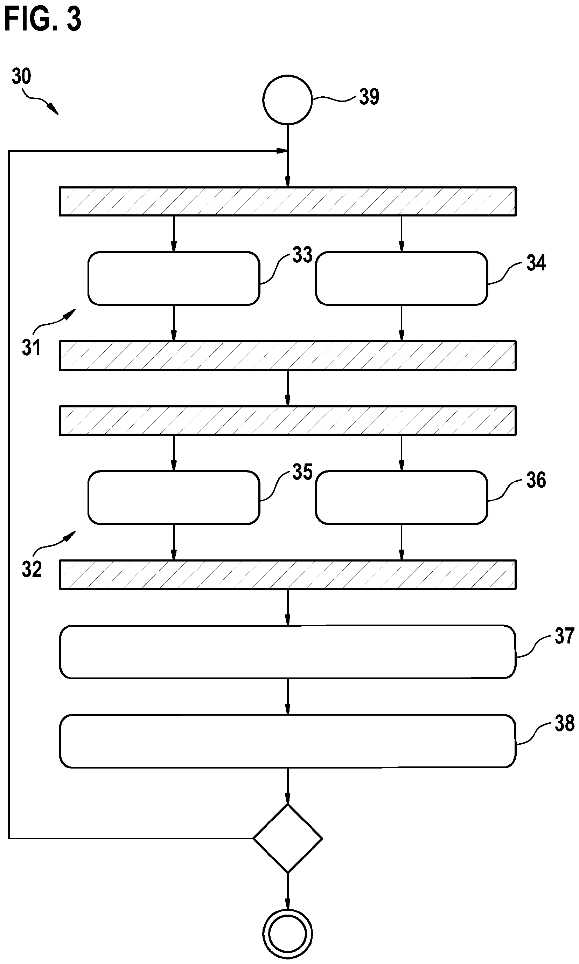

Bezugnehmend auf Figur 3 generieren sowohl der erste Knoten A als auch der zweite Knoten B zunächst lokal - d. h. intern und voneinander unabhängig - eine Bitsequenz oder Bitfolge (*bit string*). Die Bitfolge wird vorzugsweise jeweils als zufällige oder pseudozufällige Bitabfolge, beispielsweise mit Hilfe eines geeigneten Zufallszahlengenerators oder Pseudozufallszahlengenerators erzeugt. Beispielsweise könnte der erste Knoten A die Bitfolge

$$S_A = (0,1,0,0,1,1,0,1,1,1,0,0,1,0,1,1,0,0,1,0)$$

und der zweite Knoten B die Bitfolge

$$S_B = (1,0,0,1,0,0,0,1,1,0,1,1,0,1,0,0,1,0,1,1)$$

erzeugen.

In einer ersten Überlagerungsphase 31 übertragen der erste Knoten A (Bezugszeichen 33) und der zweite Knoten B (Bezugszeichen 34) zueinander weitgehend synchron ihre jeweils erzeugten Bitsequenzen über das gemeinsam genutzte Medium 10, 20 unter Verwendung des Übertragungsverfahrens mit dominanten und rezessiven Bits bzw. Übertragungszuständen. Dabei sind verschiedene Möglichkeiten zur Synchronisierung der entsprechenden Übertragungen denkbar. So könnte beispielsweise entweder der erste Knoten A oder der zweite Knoten B zunächst eine geeignete Synchronisationsnachricht an den jeweils anderen Knoten B, A senden und nach einer bestimmten Zeitdauer im Anschluss an die vollständige Übertragung dieser Nachricht dann die Übertragung der eigentlichen Bitsequenzen starten. Genauso ist es aber auch denkbar, dass von einem der beiden Knoten A, B nur ein geeigneter Nachrichtenkopf (*header*) übertragen wird - z. B. ein CAN-Header bestehend aus Arbitrierungsfeld und Kontrollfeld - und während der zugehörigen Nutzdatenphase dann beide Knoten A, B gleichzeitig ihre generierten Bitsequenzen weitgehend synchron übermitteln. In einer Variante der Prozedur können die im ersten Schritt generierten Bitsequenzen des ersten Knotens A oder des zweiten Knotens B auch auf mehrere Nachrichten verteilt übertragen werden, beispielsweise wenn dies die Maximal-Größen der entsprechenden Nachrichten erforderlich machen. Auch in dieser Variante erfolgt die Übertragung der auf entsprechend viele, entsprechend große Nachrichten verteilten Bitsequenzen des jeweils anderen Knotens B, A wiederum weitgehend synchron.

Auf dem gemeinsam genutzten Medium 10, 20 überlagern sich die beiden Bitsequenzen während der Überlagerungsphase 31, wobei aufgrund der zuvor geforderten Eigenschaft des Systems mit der Unterscheidung von dominanten und rezessiven Bits die einzelnen Bits des ersten Knotens A und des zweiten Knotens B eine Überlagerung ergeben, im genannten Beispiel de facto UND-verknüpft werden. Damit ergibt sich auf dem Übertragungskanal eine entsprechende Überlagerung, die beispielsweise der mithörende dritte Knoten C detektieren könnte. Präziser ausgedrückt übertragen A und B entsprechend ihrer Bitsequenzen modulierte Signale, die sich zu einem Gesamtsignal auf dem Übertragungsmedium überlagern. Das Gesamtsignal kann dann mittels einer geeigneten Demodulation wieder in eine (logische) Bitsequenz überführt werden, die (im fehlerfreien Fall) für CAN gerade der logischen UND-Verknüpfung der Einzelbitsequenzen von A und B entspricht.

Als Beispiel einer Überlagerungsbitfolge für die obigen lokalen Bitfolgen könnte sich auf dem Übertragungskanal die folgende effektive Bitsequenz ergeben:

$$S_{\text{eff}} = S_A \wedge S_B = (0,0,0,0,0,0,0,1,1,0,0,0,0,0,0,0,0,0,1,0)$$

Sowohl der erste Knoten A als auch der zweite Knoten B detektieren während der Übertragung 33 bzw. 34 ihrer Bitsequenzen parallel die effektiven überlagerten Bitsequenzen auf dem gemeinsam genutzten Medium 10, 20. Für das Beispiel des CAN-Busses wird dies auch in konventionellen Systemen während der Überlagerungsphase gewöhnlich ohnehin gemacht.

In einer zweiten Überlagerungsphase 32 übertragen sowohl der erste Knoten A (Bezugszeichen 35) als auch der zweite Knoten B (Bezugszeichen 36) ebenfalls wieder weitgehend synchron ihre initialen Bitsequenzen, diesmal allerdings invertiert. Die Synchronisierung der entsprechenden Übertragungen kann dabei wieder genau auf dieselbe Art und Weise realisiert werden wie oben beschrieben. Auf dem gemeinsam genutzten Kommunikationsmedium 10, 20 werden die beiden Sequenzen dann wieder miteinander UND-verknüpft. Der erste Knoten A und der zweite Knoten B ermitteln wiederum die effektiven, überlagerten Bitsequenzen $S_{\text{eff}}$ auf dem gemeinsam genutzten Medium 10, 20. Für den ersten Knoten A würde sich somit die invertierte Bitsequenz

$$\overline{S_A} = (1,0,1,1,0,0,1,0,0,0,1,1,0,1,0,0,1,1,0,1)$$

und für den zweiten Knoten B die invertierte Bitsequenz

$$\overline{S_{\mathrm{B}}} = (0,1,1,0,1,1,0,0,1,0,0,1,0,1,1,0,1,0,0)$$

ergeben. Somit würden die Knoten A, B die folgende effektive, überlagerte Bitsequenz auf dem Kanal ermitteln:

$$S'_{\mathrm{eff}} = \overline{S_{\mathrm{A}}} \wedge \overline{S_{\mathrm{B}}} = (0,0,1,0,0,0,1,0,0,0,0,0,0,0,0,0,1,0,0)$$

Sowohl der erste Knoten A als auch der zweite Knoten B ermitteln während der Übertragung 35 bzw. 36 ihrer nun invertierten Bitsequenzen dann wieder die effektiven, überlagerten Bitsequenzen auf dem gemeinsam genutzten Medium 10, 20. Zu diesem Zeitpunkt kennen somit der erste Knoten A, der zweite Knoten B sowie auch ein möglicher Angreifer, der die Kommunikation 33 - 36 auf dem geteilten Medium 10, 20 mithört, die effektiven, überlagerten Bitsequenzen $S_{\mathrm{eff}}$ und $S'_{\mathrm{eff}}$. Im Gegensatz zum Angreifer kennt aber der erste Knoten A noch seine initial erzeugte, lokale Bitsequenz und der zweite Knoten B dessen initial erzeugte, lokale Bitsequenz. Der erste Knoten A wiederum kennt aber nicht die initial erzeugte, lokale Bitsequenz des zweiten Knotens B und der zweite Knoten B nicht die initial erzeugte, lokale Bitsequenz des ersten Knotens A. Die Detektion der Überlagerungsbitfolge erfolgt wiederum während der Übertragung 35, 36.

Alternativ zu dieser beispielhaften Ausführungsvariante können der erste Knoten A und der zweite Knoten B ihre invertierte, lokale Bitfolge auch direkt mit bzw. direkt nach ihrer ursprünglichen, lokalen Bitfolge versenden, d. h. die erste Überlagerungsphase 31 geht unmittelbar in die zweite Überlagerungsphase 32 über. Die ursprüngliche und die invertierte Bitfolge können dabei in einer Nachricht, aber auch in separaten Nachrichten als Teil-Bitfolgen übermittelt werden. In einer bevorzugten Ausführungsform können der erste Knoten A und der zweite Knoten B sogar innerhalb einer Nachricht abwechselnd ein zufällig erzeugtes Bit und danach das entsprechend invertierte Bit senden. Anstelle der ursprünglichen, lokalen Bitfolge (0,0,1) würde so beispielsweise die Bitfolge (0,1,0,1,1,0) gesendet. Der Begriff "Überlagerungsphase" ist insofern in einem weiten Wortsinn zu verstehen, welcher durchaus den Fall einschließt, dass in jeder Phase lediglich Bitfolgen der Länge 1 überlagert, die beiden Überlagerungsphasen insgesamt jedoch in entsprechender Anzahl wiederholt werden. Ferner sind neben der bitweise abwechselnden Übertragung von originalen und invertierten Bits noch zahlreiche andere Varianten denkbar, ohne den Rahmen der Erfindung zu verlassen.

In Schritt 37 verknüpfen der erste Knoten A und der zweite Knoten B nun jeweils lokal - also intern - die effektiven, überlagerten Bitfolgen $S_{\mathrm{eff}}$ und $S'_{\mathrm{eff}}$, insbesondere mit einer logischen ODER-Funktion. Im obigen Beispiel ergäbe sich auf diesem Wege die folgende Verknüpfung:

$$S_{\mathrm{ges}} = S_{\mathrm{eff}} \vee S'_{\mathrm{eff}} = (0,0,1,0,0,0,1,1,1,0,0,0,0,0,0,0,1,1,0)$$

Die einzelnen Bits in der aus der ODER-Verknüpfung resultierenden Bitsequenz $S_{\mathrm{ges}}$ geben nun an, ob die entsprechenden Bits von $S_{\mathrm{A}}$ und $S_{\mathrm{B}}$ identisch oder unterschiedlich sind. Das Bit ‚1' in $S_{\mathrm{ges}}$ zeigt dabei an, dass das Bit an der entsprechenden Position in $S_{\mathrm{A}}$ und $S_{\mathrm{B}}$ identisch ist wohingegen das Bit ‚0' anzeigt, dass das Bit an der entsprechenden Position in $S_{\mathrm{A}}$ und $S_{\mathrm{B}}$ unterschiedlich ist. Der erste Knoten A und der zweite Knoten B streichen daraufhin in Schritt 38 basierend auf der aus der ODER-Verknüpfung erhaltenen Bitsequenz in ihren ursprünglichen, initialen Bitsequenzen alle Bits, die in beiden Sequenzen identisch sind. Dies führt folglich zu entsprechend verkürzten Bitsequenzen $S_{\mathrm{A_v}} = (0,1,0,1,1,1,0,0,1,0,1,1,0,0)$ und $S_{\mathrm{B_v}} = (1,0,1,0,0,0,1,1,0,1,0,0,1,1)$.

Die resultierenden, verkürzten Bitsequenzen $S_{\mathrm{A_v}}$ und $S_{\mathrm{B_v}}$ sind nun gerade invers zueinander. Somit können der erste Knoten A und der zweite Knoten B durch Inversion ihrer verkürzten Bitsequenz exakt diejenige verkürzte Bitsequenz ermitteln, welche im jeweils anderen Knoten B, A bereits vorliegt.

Voraussetzung für die Anwendung dieses Verfahrens ist, dass auf geeignete Art und Weise festgelegt werden kann, dass gerade der erste Knoten A und der zweite Knoten B ein solches gemeinsames Geheimnis generieren sollen und auch zu welchem Zeitpunkt (Bezugszeichen 39) dies geschehen sollen. Dies ist Schwerpunkt der vorliegenden Erfindung, wobei sich der prinzipielle erfindungsgemäße Ablauf wie folgt gestaltet:

Im Folgenden hat jeder Kommunikationsteilnehmer A, B, der in der Lage sein soll, mit einem anderen Knoten B, A ein gemeinsames Geheimnis basierend auf dem oben beschriebenen Verfahren zu generieren, eine Knoten-ID, die innerhalb des entsprechenden Netzwerkes (insb. innerhalb der Gruppe aller Knoten, die einen gemeinsamen Schlüssel etablieren sollen) eindeutig sein muss. Zur Etablierung einer solchen (eindeutigen) Knoten-ID gibt es verschiedene Möglichkeiten, wie z. B. die Wiederverwendung einer ohnehin bereits vorhandenen (eindeutigen) ID - in Betracht kommen z. B. MAC-Adresse, Seriennummer, IPv6-Adresse, International Mobile Station Equipment Identity (IMEI) etc. -, die Zuweisung einer (eindeutigen) ID während der Produktion der Kommunikationsteilnehmer A, B bzw. der Integration der Teilnehmer A, B in den Netzwerkverbund 10, 20, A, B, C (bei Fahrzeugnetzwerken z. B. am Fertigungsende des Erstausrüsters (*original equipment manufacturer,* OEM), Zuweisung einer (eindeutigen) ID durch einen Endanwender oder einen Servicemitarbeiter (bei Fahrzeugnetzwerken z. B. einen Mechaniker oder Werkstattmitarbeiter) oder die automatische Zuweisung oder Etablierung (eindeutiger) IDs mittels eines geeigneten Protokolls oder Ablaufs.

Ist eine solche eindeutige Identifizierung der verschiedenen Kommunikationsteilnehmer A, B möglich, so kann das Verfahren zur Generierung eines gemeinsamen Geheimnisses zwischen den Kommunikationsteilnehmern A und B gemäß den obigen Ausführungen wie folgt initiiert werden:

In einer ersten Variante initiiert der als Masterknoten fungierende dritte Knoten C die Etablierung des gemeinsamen Geheimnisses zwischen dem ersten Knoten A und dem zweiten Knoten B durch das Versenden einer speziellen Nachricht, die mindestens folgende Bestandteile umfassen sollte:

1. einen Nachrichtentyp, der anzeigt, dass ein gemeinsames Geheimnis etabliert werden soll,
2. eine (eindeutige) ID des ersten Knotens A,
3. eine (eindeutige) ID des zweiten Knotens B sowie
4. optional eine Kennung des Anwendungsfalls (*use case*), die den ersten Knoten A und den zweiten Knoten B z. B. darüber informieren kann, für welchen Zweck ein gemeinsames Geheimnis oder ein symmetrischer kryptographischer Schlüssel etabliert werden soll, wie lang dieser sein soll etc.

Für den wichtigen Fall eines CAN-basierten Kommunikationssystems wird der Nachrichtentyp vorzugsweise mit einer speziellen CAN-Objektkennung (*message identifier,* ID) realisiert, wohingegen die anderen Angaben vorzugsweise im Nutzdatenteil (*payload*) eines CAN-Rahmens übertragen werden.

Der erste Knoten A und der zweite Knoten B empfangen die vom Masterknoten C versendete Nachricht, stellen fest, dass sie zur Generierung eines gemeinsamen Geheimnisses aufgefordert sind und starten dann (nach ggf. weiteren Initialisierungsschritten) die Prozedur 31 - 38 gemäß den obigen Ausführungen. Dies kann u. a. nach einer Zeitdauer $t_1$ nach dem Empfang der Nachricht des Masterknotens C oder unmittelbar nach dem Empfang einer Nachricht des Masterknotens C angestoßen werden, sodass die Nachrichten des ersten Knotens A und des zweiten Knotens B direkt nach dem dritten Intermission-Bit gleichzeitig mit dem dominanten Bit des folgenden Datenrahmens (*start of frame,* SOF) beginnen. Alternativ entscheidet die Reihenfolge, in der der Masterknoten C den ersten Knoten A und den zweiten Knoten B in seiner Nachricht identifiziert hat, implizit, welcher der beteiligten Knoten A, B für die Etablierung eines gemeinsamen Geheimnisses eine koordinierende Rolle hat und der somit die entsprechende Prozedur 31 - 38 dann tatsächlich anstößt (zu einem geeigneten Zeitpunkt und mit ggf. einer weiteren geeigneten Nachricht).

Diese erste Variante lässt sich auch ohne weiteres auf die Etablierung von Gruppengeheimnissen, insbesondere Gruppenschlüsseln, verallgemeinern. In diesem Fall würde der Masterknoten C in seiner initialen Nachricht entweder die Identifier aller zu beteiligenden Knoten mit aufnehmen (also z. B. den ersten Knoten A, den zweiten Knoten B, einen dritten Knoten C und einen vierten Knoten D) oder es würden spezielle Gruppenkennungen definiert werden, durch die klar ist, welche Knoten A, B, C, D zu der entsprechenden Gruppe gehören.

Bei einer zweiten Variante ohne Masterknoten C wird die Etablierung des gemeinsamen Geheimnisses zwischen dem ersten Knoten A und dem zweiten Knoten B direkt von einem der beiden beteiligten Knoten A, B angestoßen. Beispielsweise der erste Knoten A initiiert die Etablierung des gemeinsamen Geheimnisses zwischen dem ersten Knoten A und dem zweiten Knoten B durch das Versenden einer speziellen Nachricht, die mindestens folgende Bestandteile umfassen sollte:

1. einen Nachrichtentyp, der anzeigt, dass ein gemeinsames Geheimnis etabliert werden soll,
2. eine (eindeutige) ID des zweiten Knotens B,
3. optional eine (eindeutige) ID des ersten Knotens A sowie
4. optional eine Kennung des Anwendungsfalls, die den ersten Knoten A und den zweiten Knoten B z. B. darüber informieren kann, für welchen Zweck ein gemeinsames Geheimnis oder ein symmetrischer kryptographischer Schlüssel etabliert werden soll, wie lang dieser sein soll etc.

Hier wird zunächst davon ausgegangen, dass es im ganzen Netzwerk 10, 20, A, B, C lediglich einen Nachrichtentyp gibt, mit dem die Etablierung eines gemeinsamen Geheimnisses angestoßen werden kann. Da z. B. bei CAN-Netzwerken 20, A, B, C vorteilhafterweise die CAN-Objektkennung als Nachrichtentyp verwendet wird, führt dies dazu, dass mit einer Restfehlerwahrscheinlichkeit zwei verschiedene Knoten A, B, C gleichzeitig die Etablierung eines Geheimnisses anstoßen, was in diesem Fall nicht über die Arbitrierung des Busses 20 aufgelöst werden würde. Daher kann es sinnvoll sein, dass die jeweiligen Knoten A, B, C noch ihre optionale eigene ID mit übertragen, damit spätestens bei der Übertragung dieses Feldes die Kollision detektiert und geeignet aufgelöst werden kann. Andernfalls sind weitere Mechanismen oder höhere Protokolle wünschenswert, um mit solchen möglichen Kollisionen umzugehen.

Bei einer dritten Variante wird die bei den ersten und zweiten Varianten getroffene Annahme, dass es lediglich einen Nachrichtenkennung (*message identifier,* ID) gibt (z. B. CAN-ID), mit der angezeigt werden kann, dass ein gemeinsames Geheimnis etabliert werden soll, abgemildert. Vielmehr stehen für diesen Zweck nun mehrere Nachrichtenkennungen zur Verfügung, mit folgenden Optionen:

Für jedes mögliche Tupel an Kommunikationsteilnehmern A, B, die prinzipiell ein gemeinsames Geheimnis etablieren können sollen, kann es eine eigene Nachrichtenkennung geben. Die Etablierung eines entsprechenden Geheimnisses kann somit - analog zur ersten Variante oder zweiten Variante - durch den Masterknoten C oder einen der beteiligten Kommunikationsteilnehmer A, B durch Senden eines entsprechenden Nachrichtentyps initiiert werden. Im Nutzdatenteil können optional dann nochmals die entsprechenden Knoten-IDs (sofern vorhanden) sowie ebenfalls optional wieder eine geeignete Anwendungsfallkennung mit übertragen werden.

Alternativ verfügt jeder Knoten A, B, der prinzipiell ein gemeinsames Geheimnis etablieren können soll, über einen nur von ihm zu verwendenden Message-Identifier, mit dem er die Etablierung eines solchen Geheimnisses mit einem anderen Knoten B, A anstoßen kann. Mögliche Kollisionen bei gleichzeitigem Etablierungswunsch von zwei Knoten A, B wie bei der zweiten Variante können somit bspw. bei CAN-basierten Netzwerken 20, A, B, C (falls die CAN-Objektkennung als Nachrichtenkennung dient) vermieden werden. Die obige Prozedur wird in diesem Fall durch einen der beteiligten Knoten A, B durch die Übertragung einer Nachricht mit der entsprechenden (knotenspezifischen) Nachrichtenkennung angestoßen, die zusätzlich u. a. noch folgende Bestandteile enthalten sollte:

1. die Knoten-ID des anderen Knotens B, A, mit dem ein gemeinsames Geheimnis etabliert werden soll,
2. optional die eigene Knoten-ID sowie
3. optional eine Kennung des Anwendungsfalls.

In einer vierten Variante gibt es einen fest vorgegebenen Zeitplan, den jeder Knoten A, B, C, D kennt und über den festgelegt ist, wer mit wem in welcher Reihenfolge ein gemeinsames Geheimnis etablieren soll. Dies könnte beispielsweise wie folgt aussehen:

1. Knoten A - Knoten B

2. Knoten A - Knoten C

3. Knoten B - Knoten D

4. Knoten B - Knoten C

Der Zeitplan selbst kann z. B. während der Produktion oder auf sonstige Art und Weise in die verschiedenen Kommunikationsteilnehmer A, B, C, D eingebracht werden oder er kann alternativ von einem Knoten (z. B. Master oder Gateway) festgelegt und dann mit einer geeigneten Nachricht an alle anderen Knoten A, B, C, D kommuniziert werden.

Da alle Knoten A, B, C, D Zugriff auf das gemeinsam genutzte Medium 10, 20 haben, kann jeder Knoten A, B, C, D prinzipiell feststellen, wie viele gemeinsame Geheimnisse bereits etabliert worden sind und wie weit die Abarbeitung der festgelegten Reihenfolge bereits fortgeschritten ist. Ist ein Knoten A, B, C, D selbst als nächstes an der Reihe, so nimmt er an der Etablierung eines gemeinsamen Geheimnisses unter Berücksichtigung der entsprechenden Zugriffs- oder Synchronisierungsmechanismen teil. Alternativ sendet ein Knoten A, B, C, D (z. B. einer der beiden Knoten oder beide Knoten, die als Letztes ein gemeinsames Geheimnis etabliert haben) nach der erfolgreichen Etablierung eine geeignete Nachricht, mit der zum nächsten Eintrag der festgelegten Reihenfolge übergegangen wird. Dies kann insb. auch durch den Masterknoten erfolgen.

Alternativ zu dem gerade beschriebenen Ansatz beinhaltet der zuvor festgelegte Zeitplan keine Tupel, sondern einzelne Knoten-IDs. Er legt dabei insbesondere fest, welche Knoten A, B, C, D in welcher Reihenfolge generell mit anderen Knoten A, B, C, D gemeinsame Geheimnisse etablieren dürfen. Ein Eintrag im Zeitplan kann dabei entweder zu Etablierung von genau einem gemeinsamen Geheimnis mit einem anderen Knoten A, B, C, D berechtigen oder zu mehreren. Ein entsprechender Zeitplan sieht bspw. wie folgt aus:

1. Knoten A

2. Knoten B

3. Knoten D

4. Knoten C

Auch hier kann der Übergang zum nächsten Eintrag der festgelegten Reihenfolge durch das Versenden einer geeigneten Nachricht realisiert werden, z. B. indem der zweite Knoten B eine Nachricht sendet, wenn er gerade an der Reihe war und nun keine weiteren Geheimnisse durch ihn mehr etabliert werden sollen. Implizit kann dies auch durch das Beobachten der anderen Knoten A, B, C, D geschehen, die feststellen können, wenn der Knoten B kein weiteres Geheimnis mehr etablieren möchte. Falls ein Eintrag nur zur Generierung eines gemeinsamen Geheimnisses berechtigt, erfolgt in diesem Fall anschließend automatisch der Übergang zum nächsten Eintrag. Der Eintrag kann alternativ erfolgen, wenn der Knoten B gerade an der Reihe ist, aber für mindestens die Zeitdauer $t_2$ kein weiteres gemeinsames Geheimnis mehr etabliert hat

Ein Knoten A, B, C, D, der gerade an der Reihe ist, kann die Generierung eines gemeinsamen Geheimnisses mit einem anderen Knoten generell dann analog zu den vorher beschriebenen Verfahren initiieren.

Gemäß einer fünften Variante gibt es ein (virtuelles) Token, das unter mehreren Knoten - hierunter den exemplarischen Knoten A, B - weitergereicht wird oder alternativ von einem Masterknoten C verteilt wird. Wer das Token besitzt, darf dann (unter Verwendung einer für alle gleichen Nachrichtenkennung) eine feste oder variable Anzahl von gemeinsamen Geheimnissen mit anderen Knoten B, A etablieren. Der Knoten A, B kann das Token durch explizite Weitergabe an einen anderen Knoten B, A (mit Hilfe einer geeigneten Nachricht), durch explizite Rückgabe an einen Masterknoten C, durch Entzug durch den Masterknoten C (mit Hilfe einer geeigneten Nachricht) oder durch die ausbleibende Etablierung eines gemeinsamen Geheimnisses trotz Besitz des Tokens für mindestens die Zeitdauer $t_3$ wieder verlieren. In diesem Fall fällt das Token vorzugsweise wieder automatisch an einen Masterknoten C zurück.

Bei den zuvor beschriebenen Alternativen wurde gemeinhin davon ausgegangen, dass mit Hilfe einer geeigneten Nachrichtenkennung der Wunsch zur Etablierung eines gemeinsamen Geheimnisses von einem Knoten A, B angezeigt werden kann, wohingegen Detailinformationen (z. B. welche Knoten A, B beteiligt sein sollen) in den Nutzdaten kodiert waren. Diese Informationen können prinzipiell aber auch alle direkt in der Nachrichtenkennung kodiert werden. Hierzu wird ein spezieller Abschnitt der Nachrichtenkennung für diesen Zweck reserviert. Eine solche Nachrichtenkennung umfasst beispielsweise

- $n$ Bits zur Identifikation des reservierten Abschnitts der Nachrichtenkennung (andere Nachrichtenkennungen müssen sich ziffernwertmäßig in mindestens einem dieser Bits unterscheiden),
- $m$ Bits zur Identifikation des ersten Knotens A sowie
- $l$ Bits zur Identifikation des zweiten Knotens B.

Im Fall von CAN-Netzwerken mit 11-stelligen Objektkennungen könnten z. B. die Werte $n$ = 5, $m$ = 3 und $l$ = 3 gewählt werden. Es ist selbstredend, dass diese Kodierungsmöglichkeit für alle zuvor beschriebenen Varianten geeignet anwendbar ist.

Dieses Verfahren kann beispielsweise in Software oder Hardware oder in einer Mischform aus Software und Hardware beispielsweise in einem Steuergerät implementiert sein.

**Patentansprüche**

1. Verfahren (30) zum Erzeugen eines gemeinsamen Geheimnisses in einem Kommunikationssystem (10, 20, A, B, C) mit einem ersten Knoten (A), einem zweiten Knoten (B) und einem von den Knoten (A, B) gemeinsam genutzten Medium (10, 20), umfassend folgende Merkmale:

   - auf ein vorgegebenes Ereignis (39) hin treten der erste Knoten (A) und der zweite Knoten (B) in eine erste Überlagerungsphase (31) ein,
   - in der ersten Überlagerungsphase (31) sendet (33) der erste Knoten (A) eine erste Bitfolge und der zweite Knoten (B) sendet (34) synchron dazu eine zweite Bitfolge, **gekennzeichnet durch** folgende Merkmale:
   - der erste Knoten (A) und der zweite Knoten (B) detektieren zeitgleich eine effektive dritte Bitfolge, zu welcher sich die erste Bitfolge und die zweite Bitfolge auf dem Medium (10, 20) stellenweise überlagern,
   - in einer zweiten Überlagerungsphase (32) sendet (35) der erste Knoten (A) die erste Bitfolge stellenweise invertiert, der zweite Knoten (B) sendet (36) synchron dazu die zweite Bitfolge stellenweise invertiert und der erste Knoten (A) und der zweite Knoten (B) detektieren zeitgleich eine effektive vierte Bitfolge, zu welcher sich die invertierte erste Bitfolge und die invertierte zweite Bitfolge überlagern,
   - der erste Knoten (A) und der zweite Knoten (B) verknüpfen (37) die dritte Bitfolge stellenweise mit der vierten Bitfolge zu einer fünften Bitfolge und
   - der erste Knoten (A) und der zweite Knoten (B) ergänzen (38) ein erstes Geheimnis, indem der erste Knoten (A) Bits der ersten Bitfolge und der zweite Knoten (B) entsprechende Bits der zweiten Bitfolge streicht, welche gemäß der fünften Bitfolge ziffernwertmäßig übereinstimmen.

2. Verfahren nach Anspruch 1,
**gekennzeichnet durch** folgende Merkmale:

- das Kommunikationssystem umfasst ferner eine logische Instanz, insbesondere einen Masterknoten (C), und
- die Instanz führt das Ereignis (39) herbei, indem die Instanz eine Nachricht mit einer vorgegebenen Kennung, insbesondere einer CAN-Objektkennung, sendet.

3. Verfahren nach Anspruch 1,
**gekennzeichnet durch** folgendes Merkmal:

- der erste Knoten (A) oder der zweite Knoten (B) führt das Ereignis (39) herbei, indem er eine Nachricht mit einer vorgegebenen Kennung, insbesondere einem speziellen CAN Message-Identifier, sendet.

4. Verfahren nach Anspruch 2 oder 3,
**gekennzeichnet durch** folgendes Merkmal:

- die Kennung bezeichnet den ersten Knoten (A) und den zweiten Knoten (B) gemeinsam.

5. Verfahren nach Anspruch 2 oder 3,
**gekennzeichnet durch** folgende Merkmale:

- die Kennung bezeichnet genau einen der Knoten (A, B).

6. Verfahren nach Anspruch 1,
**gekennzeichnet durch** folgende Merkmale:

- das Ereignis (39) tritt ein, sobald mindestens einer der Knoten (A, B) nach einem vorgegebenen Zeitplan zu dem Erzeugen des Geheimnisses berechtigt ist.

7. Verfahren nach Anspruch 1,
**gekennzeichnet durch** folgende Merkmale:

- das Ereignis (39) tritt ein, sobald mindestens einer der Knoten (A, B) ein über das Medium (10, 20) übertragbares Token erlangt.

8. Computerprogramm, welches eingerichtet ist, alle Schritte des Verfahrens (30) im ersten oder zweiten Knoten (A, B) nach einem der Ansprüche 1 bis 7 auszuführen.

9. Maschinenlesbares Speichermedium, auf dem das Computerprogramm nach Anspruch 8 gespeichert ist.

10. Vorrichtung (A, B, C) mit Merkmalen zur Ausführung eines Verfahrens (30) in einem ersten oder zweiten Knoten (A, B) nach einem der Ansprüche 1 bis 7.

**Claims**

1. Method (30) for generating a shared secret in a communication system (10, 20, A, B, C) having a first node (A), a second node (B) and a medium (10, 20) jointly used by the nodes (A, B),
comprising the following features:

- a prescribed event (39) prompts the first node (A) and the second node (B) to enter a first overlap phase (31),
- in the first overlap phase (31) the first node (A) sends (33) a first bit sequence and the second node (B) sends (34) a second bit sequence in sync therewith, **characterized by** the following features:
- the first node (A) and the second node (B) simultaneously detect an effective third bit sequence that the first bit sequence and the second bit sequence produce by having overlapping digits on the medium (10, 20),
- in a second overlap phase (32) the first node (A) sends (35) the first bit sequence with some digits inverted, the second node (B) sends (36) the second bit sequence with some digits inverted in sync therewith and the first node (A) and the second node (B) simultaneously detect an effective fourth bit sequence that the inverted first bit sequence and the inverted second bit sequence produce by overlapping,
- the first node (A) and the second node (B) logically combine (37) some digits of the third bit sequence and of the fourth bit sequence to produce a fifth bit sequence, and
- the first node (A) and the second node (B) add to (38) a first secret by virtue of the first node (A) erasing bits of the first bit sequence and the second node (B) erasing corresponding bits of the second bit sequence that have concordant digit values according to the fifth bit sequence.

2. Method according to Claim 1,
**characterized by** the following features:

   - the communication system further comprises a logic entity, in particular a master node (C), and
   - the entity brings about the event (39) by virtue of the entity sending a message having a prescribed identifier, in particular a CAN object identifier.

3. Method according to Claim 1,
**characterized by** the following feature:

   - the first node (A) or the second node (B) brings about the event (39) by virtue of it sending a message having a prescribed identifier, in particular a specific CAN message identifier.

4. Method according to Claim 2 or 3,
**characterized by** the following feature:

   - the identifier denotes the first node (A) and the second node (B) jointly.

5. Method according to Claim 2 or 3,
**characterized by** the following feature:

   - the identifier denotes precisely one of the nodes (A, B).

6. Method according to Claim 1,
**characterized by** the following feature:

   - the event (39) occurs as soon as at least one of the nodes (A, B) is entitled to generate the secret according to a prescribed schedule.

7. Method according to Claim 1,
**characterized by** the following feature:

   - the event (39) occurs as soon as at least one of the nodes (A, B) obtains a token transmittable via the medium (10, 20).

8. Computer program configured to carry out all the steps of the method (30) in the first or second node (A, B) according to one of Claims 1 to 7.

9. Machine-readable storage medium storing the computer program according to Claim 8.

10. Apparatus (A, B, C) having features for carrying out a method (30) in a first or second node (A, B) according to one of Claims 1 to 7.


**Revendications**

1. Procédé (30) permettant de générer un secret partagé dans un système de communication (10, 20, A, B, C) avec un premier noeud (A), un deuxième noeud (B) et un média (10, 20) utilisé en commun par les noeuds (A, B), comprenant les caractéristiques suivantes:

- en vue d'un événement prédéterminé (39) le premier noeud (A) et le deuxième noeud (B) entrent dans une première phase de superposition (31),
- dans la première phase de superposition (31), le premier noeud (A) envoie (33) une première séquence de bits et le deuxième noeud (B) envoie (34) de façon synchronisée avec celle-ci une deuxième séquence de bits,

**caractérisé par** les caractéristiques suivantes:

- le premier noeud (A) et le deuxième noeud (B) détectent en même temps une troisième séquence de bits effective, dans laquelle la première séquence de bits et la deuxième séquence de bits se superposent localement sur le média (10, 20),
- dans une deuxième phase de superposition (32) le premier noeud (A) envoie (35) la première séquence de bits localement inversée, le deuxième noeud (B) envoie (36) de façon synchronisée avec celle-ci la deuxième séquence de bits localement inversée et le premier noeud (A) et le deuxième noeud (B) détectent en même temps une quatrième séquence de bits effective, dans laquelle la première séquence de bits inversée et la deuxième séquence de bits inversée se superposent,
- le premier noeud (A) et le deuxième noeud (B) lient (37) la troisième séquence de bits localement à la quatrième séquence de bits en une cinquième séquence de bits et
- le premier noeud (A) et le deuxième noeud (B) complètent (38) un premier secret, par le fait que le premier noeud (A) biffe des bits de la première séquence de bits et que le deuxième noeud (B) biffe des bits de la deuxième séquence de bits, qui se correspondent en valeur numérique selon la cinquième séquence de bits.

2. Procédé selon la revendication 1, **caractérisé par** les caractéristiques suivantes:

- le système de communication comprend en outre une instance logique, en particulier un noeud maître (C), et
- l'instance provoque l'événement (39), par le fait que l'instance envoie un message avec une identification prédéterminée, en particulier une identification d'objet CAN.

3. Procédé selon la revendication 1, **caractérisé par** la caractéristique suivante:

- le premier noeud (A) ou le deuxième noeud (B) provoque l'événement (39), par le fait qu'il envoie un message avec une identification prédéterminée, en particulier un identifiant de message CAN spécial.

4. Procédé selon une revendication 2 ou 3, **caractérisé par** la caractéristique suivante:

- l'identification désigne le premier noeud (A) et le deuxième noeud (B) en commun.

5. Procédé selon une revendication 2 ou 3, **caractérisé par** la caractéristique suivante:

- l'identification désigne exactement un des noeuds (A, B) .

6. Procédé selon la revendication 1, **caractérisé par** la caractéristique suivante:

- l'événement (39) survient, dès qu'au moins un des noeuds (A, B) est autorisé selon un horaire prédéterminé à produire le secret.

7. Procédé selon la revendication 1, **caractérisé par** la caractéristique suivante:

- l'événement (39) survient, dès qu'au moins un des noeuds (A, B) obtient un indicateur transmissible par le média (10, 20).

8. Programme informatique, qui est conçu pour exécuter dans le premier ou le deuxième noeud (A, B) toutes les étapes du procédé (30) selon l'une quelconque des revendications 1 à 7.

9. Média de stockage lisible à la machine, sur lequel le programme informatique selon la revendication 8 est mémorisé.

10. Dispositif (A, B, C) avec des caractéristiques pour exécuter dans un premier ou un deuxième noeud (A, B) un procédé (30) selon l'une quelconque des revendications 1 à 7.

# FIG. 1

# FIG. 2

# FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012215326 A1